# EUROPEAN PATENT APPLICATION

(11) **EP 4 675 477 A1**
(43) Date of publication of application: **07.01.2026**
(21) Application number: 25181840.7
(22) Date of filing: 10.06.2025
(51) Int. Cl.: G06F 21/57, G06F 21/71, G06F 21/74

(54) **METHOD FOR CONFIGURING A MICROCONTROLLER AND CORRESPONDING MICROCONTROLLER**

(30) Priority: 01.07.2024 IT 202400015112
(71) Applicant: STMicroelectronics International N.V., 1228 Plan-les-Ouates, Geneva (CH)
(72) Inventor: LA TERRA, Salvatore, 95125 Catania (IT); CUTULI, Francesca Maria Grazia, 95030 Catania (IT); MARTORANA, Rosario, 95129 Catania (IT)
(74) Representative: Buzzi, Notaro & Antonielli d'Oulx S.p.A.

(57) **Abstract**

Method (10) for configuring a microcontroller, said microcontroller comprising at least one non-volatile memory configured to store:
- secret data comprising a first set of security configurations,
- a second set of security configurations, and
- a state of the microcontroller selected out of a first value (A₁) indicative of a first operation mode (104) of the microcontroller, a second value (A₂) indicative of a transition from the first operation mode (104) to a second operation mode (108), and a third value (A₃) indicative of the second operation mode (108) of the microcontroller;
wherein said method (10) comprises:
- if the state of the microcontroller is equal to the first value (A₁), operating the microcontroller in the first operation mode (104) using the first set of security configurations;
- if the state of the microcontroller is equal to the second value (A₂), erasing the secret data (106) and operating the microcontroller in the second operation mode (108) using the second set of security configurations; and
- if the state of the microcontroller is equal to the third value (A₃), operating the microcontroller in the second operation mode (108) using the second set of security configurations.

## Description

### Technical field

The description relates to a method for configuring microcontrollers.

One or more embodiments are related to a method for configuring microcontrollers with security-relevant applications.

### Background

Security-relevant microcontrollers, that is, secure microcontrollers, are designed to enhance the security of electronic devices and systems and are used in various applications, such as, Internet of Things ("IoT"), automotive, industrial control, or consumer electronics applications, or the like.

In fact, secure microcontrollers are microcontrollers equipped with additional processing and logic circuitry designed primarily to enable security, that is, protection against unauthorized reading, modification, or replay of encrypted, authenticated, or other content.

For instance, a common application of secure microcontrollers is their use to manage batteries such as vehicle batteries, for instance, in order to optimize the battery usage.

It would be advantageous to be able to reuse the secure microcontrollers when the respective device wherein they are embedded, that is, a battery, reaches the end of life.

For instance, if such secure microcontrollers are used to manage vehicle batteries, when such batteries reach the end of life it would be advantageous to repurpose such microcontrollers rather than dispose of them.

In the automotive field, such repurposing of the microcontrollers, in addition to being advantageous, is also regulated via European regulations, for instance, the EU Regulation 2023/1542 of the European Parliament.

Such EU Regulation concerns waste batteries and aims at reducing the impacts of their production and use, in particular, by introducing new requirements that comprise the possibility of using industrial and automotive batteries for different purposes, for instance, as stationary energy storage batteries, when such batteries are no longer fit for the original purposes for which they were manufactured.

Usually, microcontrollers used to manage batteries are to be reconditioned in order to allow such reuse.

Therefore, in view of such reuse of the microcontrollers, it would be beneficial to delete the original application non-volatile memories and security configurations before that the system can be reused in order to preserve the integrity of the secrets of the manufacturer embedded in the microcontroller.

Currently, such operation of deletion is performed by returning the battery to the factory line.

In fact, the secure microcontrollers used on the field are configured to operate in a security state, that is, a state of the microcontroller where the security features can be selectively masked if not requested by the application, such security state being referred to as "in field" and being a security state wherein every security feature available is enabled in order to avoid unauthorized modifications of the operational parameters and intrusions by hackers.

To reuse secure microcontrollers, the secret information of the manufacturer is to be deleted and the security features are to be disabled since such microcontrollers are to be reprogrammed for being used in a different application.

Therefore, the microcontrollers are returned to the manufacturer, which can lower the security protections without exposing the system to the risk of unauthorized access.

The security features can be lowered by setting the microcontrollers to operate in a security state referred to as "failure analysis" wherein a limited number of security features is activated, such "failure analysis" security state being a state used for investigating failures affecting microcontrollers that were configured to operate in an "in field" security state.

Such "failure analysis" security state is a process that leaves the microcontrollers in an unusable state (for instance, the microcontroller may be in a state under reset or a jitter may be added in the clock of its communication peripherals) and that cannot be reversed.

Usually, if a microcontroller is affected by failures, the microcontroller remains in the "in field" security state until the original equipment manufacturer ("OEM") or the vehicle manufacturer initiates the transition to the "failure analysis" security state in order to investigating the failures affecting the microcontroller.

If a microcontroller is not affected by failures, such microcontroller can enter such "failure analysis" security state again with the intervention of the original equipment manufacturer ("OEM") or the vehicle manufacturer as they can store and retrieve the relevant passwords from the microcontroller.

Therefore, it is noted that such reuse of secure microcontrollers, for instance, configured to manage batteries, leads to an unwieldy burden for factory lines since local dealers cannot be trusted with passwords to access the secrets within the microcontrollers in order to protect the secrets of the manufacturer embedded therein.

Solutions to simplify the deletion of secret information stored in microcontrollers used for security-related applications and the disabling of the security features without exposing the system to risk of unauthorized operations would be beneficial in order to facilitate the reuse of such microcontrollers in different applications.

### Object and summary

An object of one or more embodiments is to contribute in providing the deletion of secret information stored in microcontrollers used for security-related applications and the disabling of the security features without exposing the system to risk of unauthorized operations in order to facilitate the reuse of such microcontrollers in different applications.

According to one or more embodiments, that object is achieved via a method for configuring a microcontroller having the features set forth in the claims that follow.

The claims are an integral part of the technical teaching provided in respect of the embodiments.

Solutions as described herein include a method for configuring a microcontroller, said microcontroller comprising at least one non-volatile memory configured to store:
- secret data comprising a first set of security configurations,
- a second set of security configurations, and
- a state of the microcontroller selected out of a first value indicative of a first operation mode of the microcontroller, a second value indicative of a transition from the first operation mode to a second operation mode, and a third value indicative of the second operation mode of the microcontroller;
wherein said method comprises:
- if the state of the microcontroller is equal to the first value, operating the microcontroller in the first operation mode using the first set of security configurations;
- if the state of the microcontroller is equal to the second value, erasing the secret data and operating the microcontroller in the second operation mode using the second set of security configurations; and
- if the state of the microcontroller is equal to the third value, operating the microcontroller in the second operation mode using the second set of security configurations.

In various embodiments, said erasing operation is performed via an atomic operation.

In various embodiments, said at least one non-volatile memory is configured to store a second operation mode enabling variable indicating to enable or to disable the second operation mode of the microcontroller, and:
- the state of the microcontroller is set to the first value;
- in response to the second operation mode enabling variable indicating to enable the second operation mode, setting the state of the microcontroller to the second value; and
- in response to the operation of erasing the secret data, setting the state of the microcontroller to the third value.

In various embodiments, the second operation mode enabling variable indicates to disable the second operation mode, and said second operation mode enabling variable is set to indicate to enable the second operation mode by a user.

In various embodiments, said at least one non-volatile memory is configured to store a third operation mode enabling variable indicating to enable or to disable a third operation mode of the microcontroller, said third operation mode being related to an unusable state of the microcontroller, and
in response to the third operation mode enabling variable indicating to enable the third operation mode, operating the microcontroller in the third operation mode.

In various embodiments, the third operation mode enabling variable indicates to disable the third operation mode, and said third operation mode enabling variable is set to indicate to enable the third operation mode by a user.

In various embodiments, said microcontroller is embedded in a battery, in particular, a vehicle battery, and is configured to manage said battery.

In various embodiments, said at least one non-volatile memory comprise a Hardware Security Module, HSM, and said secret data comprises:
- data stored in said Hardware Security Module;
- a set of keys, in particular cryptographic keys;
- a set of passwords; and
- said first set of security configurations.

In various embodiments, said first set of security configurations comprises data used to configure the microcontroller, in particular security functions of the microcontroller, during a boot of the microcontroller or in response to a reset or a power-on operation.

In various embodiments, said microcontroller is a secure microcontroller.

One or more embodiments concern a related microcontroller.

Therefore, solutions as described herein include a microcontroller comprising a manager unit and at least one non-volatile memory configured to store:
- secret data comprising a first set of security configurations,
- a second set of security configurations, and
- a state of the microcontroller selected out of a first value indicative of a first operation mode of the microcontroller, a second value indicative of a transition from the first operation mode to a second operation mode, and a third value indicative of the second operation mode of the microcontroller;
wherein said manager unit is configured to configure the microcontroller by performing steps of the previously described method.

In various embodiments, said manager unit is implemented via a finite state machine.

In various embodiments, said manager unit comprises:
- a register interface used to access memory locations in said at least one non-volatile memory;
- at least one non-volatile memory interfaces used to perform memory reading, writing, and erasing operations; and/or
- a configuration interface used to select the first operation mode using the first set of security configurations or the second operation mode using the second set of security configurations.

In various embodiments, said microcontroller is embedded in a battery, in particular, a vehicle battery, and is configured to manage said battery.

Solutions as described herein facilitate achieving the deletion of secret information stored in microcontrollers used for security-related applications and the disabling of the security features without exposing the system to risk of unauthorized operations in order to facilitate the reuse of such microcontrollers in different applications.

### Brief description of the figures

One or more embodiments will now be described, by way of example only, with reference to the annexed figures, wherein:
- Figure 1 is a block diagram illustrating a general method for configuring a microcontroller according to embodiments of the present description;
- Figure 2 is a block diagram illustrating a succession of security states of a microcontroller according to embodiments of the present description;
- Figure 3 is a block diagram illustrating a method for configuring a microcontroller considering a decommissioning option according to embodiments of the present description;
- Figure 4 is a block diagram illustrating a method for configuring a microcontroller without considering a decommissioning option according to embodiments of the present description;
- Figure 5 is a block diagram illustrating the interactions of a memory erasing manager with other elements comprised in the microcontroller according to embodiments of the present description; and
- Figure 6 is a block diagram illustrating a memory erasing manager configured to perform erasing operations according to embodiments of the present description.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

As previously described, solutions as described herein aim at simplifying the deletion of secret information stored in microcontrollers used for security-related applications and at disabling the security features without exposing the system to risk of unauthorized operations in order to facilitate the reuse of such microcontrollers in different applications.

In addition, solutions as described herein aim at performing such deletion of secret information locally, without returning the secure microcontroller or battery wherein such microcontroller is embedded to the factory line.

It is noted that even if solutions as described herein are focused on battery management applications, solutions as described herein may also be used in other applications, provided that a secure microcontroller, that is, a microcontroller with additional processing and logic circuitry designed primarily to enable security (that is, protection against unauthorized reading, modification, or replay of encrypted, authenticated, or other content), is requested in such applications.

In addition, it is noted that, even if the following description is focused on microcontroller used in automotive applications such as microcontrollers for managing vehicle batteries, solutions as described herein may be used also in other security-relevant applications wherein security-relevant microcontrollers are requested for managing a battery.

In particular, the following description will be focused on security-relevant microcontroller used for managing vehicle batteries in automotive applications.

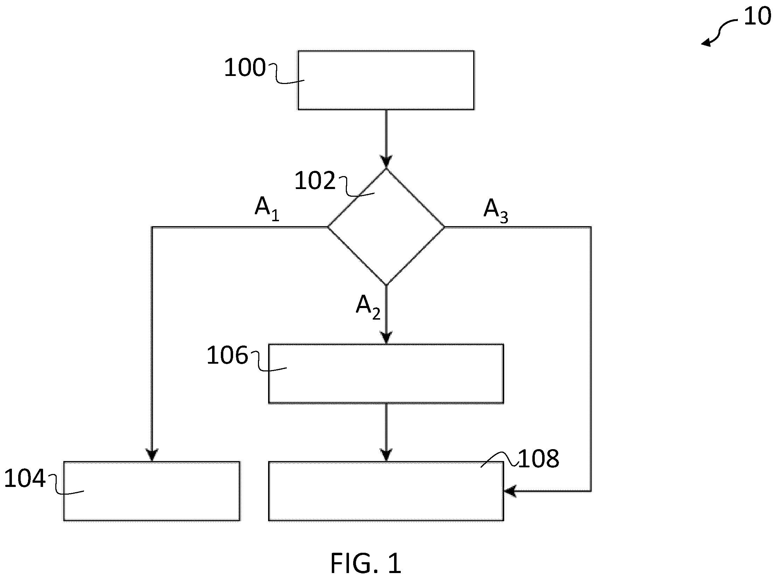

Figure 1 is a block diagram 10 illustrating a general method for configuring a microcontroller according to embodiments of the present description.

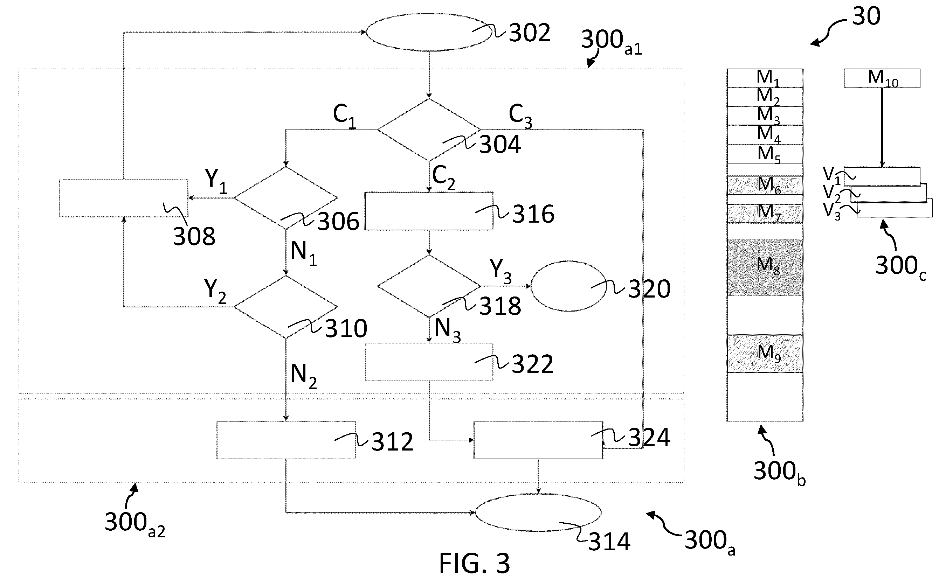

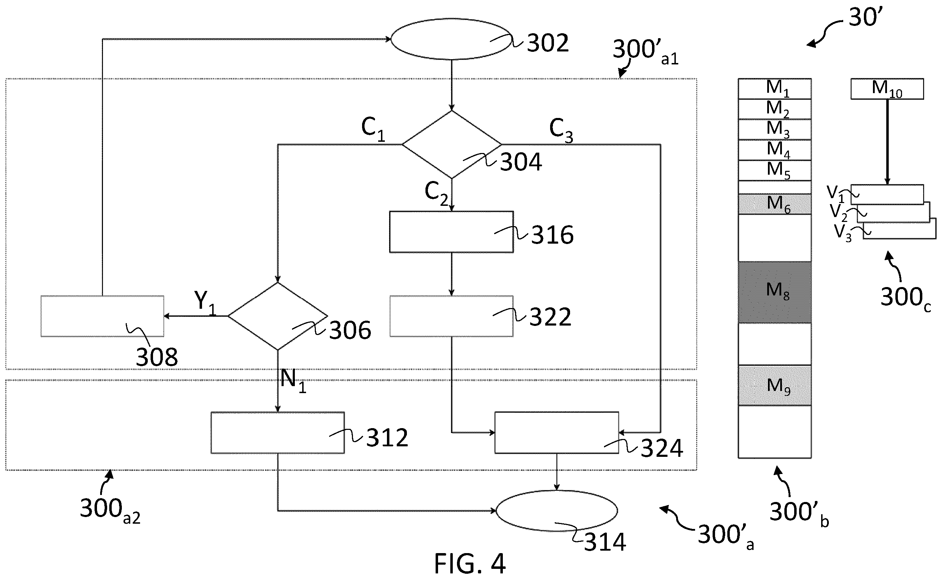

In a memory reading block 100 an operation indicating to read a given memory location M₁₀ is requested, such given memory location being a use stage memory location M₁₀ indicative of the current state of the microcontroller (see, for instance, Figure 3 or Figure 4).

In response to the reading request, a status of the microcontroller is read in status checking block 102.

Such status of the microcontroller can assume one of the following values:
- a first value equal to, for instance, "MAIN", indicating to run the microcontroller according to an original configuration, that is, a configuration that is used during the security-relevant application for which the microcontroller has been manufactured, that is, the managing of a battery, for instance, a vehicle battery;
- a second value equal to, for instance, "ACTIVATING", indicating that a transition between the original configuration and a second configuration related to a different application wherein the microcontroller is to be reused is requested and, therefore, the content of non-volatile memories is to be deleted and the value of the status of the microcontroller is advanced to a third value equal to, for instance, "SECONDARY"; and
- the third value equal to, for instance, "SECONDARY", indicating to run the microcontroller according to the second configuration.

Therefore, in response to the status of the microcontroller assuming the first value (indicated with A₁ in Figure 1), the microcontroller is run, in a first running block 104, using the original configuration, that is, the microcontroller is run in order to manage the battery for which it was manufactured.

In response to the status of the microcontroller assuming the second value (indicated with A₂ in Figure 1), the content of the non-volatile memories of the microcontroller is deleted, for instance, in a memory erasing block 106, and the microcontroller is run, in a second running block 108, using the second configuration.

It is noted that such memory erasing block 106 is configured to perform atomic erase operations, that is, erase operations that are indivisible and run without being interrupted, with the rest of the microcontroller being in a reset state.

In response to the status of the microcontroller assuming the third value (indicated with A₃ in Figure 1), the microcontroller is run, in the second running block 108, using the second configuration.

Therefore, solutions as described herein are related to a method 10 for configuring a microcontroller, such microcontroller comprising at least one non-volatile memory configured to store:
- secret data, that is, the secret information of the manufacturer, comprising a first set of security configurations, that is, the original configuration related to the security-relevant application,
- a second set of security configurations, that is, the second configuration related to the different application; and
- a state of the microcontroller, that is, the current state of the microcontroller, such state of the microcontroller being selected out of:
   a first value, for instance, "MAIN", indicative of a first operation mode of the microcontroller, that is, indicating to run the microcontroller according to the original configuration, for instance, in the first running block 104;
   a second value, for instance, "ACTIVATING", indicative of a transition from the first operation mode 104 to a second operation mode, that is, indicating to run the microcontroller according to the second configuration related to the different application, for instance, in the second running block 108; and
   a third value, for instance, "SECONDARY", indicative of the second operation mode 108 of the microcontroller.

Such method 10 comprises:
- if the state of the microcontroller is equal to the first value, operating the microcontroller in the first operation mode, that is, according to the original configuration, for instance, in the first running block 104, using the first set of security configurations;
- if the state of the microcontroller is equal to the second value, erasing the secret data, for instance, via the memory erasing block 106, and operating the microcontroller in the second operation mode, that is, according to the second configuration, for instance, in the second running block 108, using the second set of security configurations; and
- if the state of the microcontroller is equal to the third value, operating the microcontroller in the second operation mode, that is, according to the second configuration, for instance, again in such second running block 108, using such second set of security configurations.

In addition, in solutions as described herein, such erasing operation may be performed, as previously described, via an atomic operation.

In embodiments according to the present description, such microcontroller may be embedded in a battery, in particular, a vehicle battery, and may be configured to manage said battery.

In addition, in embodiments according to the present description, such microcontroller is a secure microcontroller, that is, a microcontroller configured to be used in security-relevant applications.

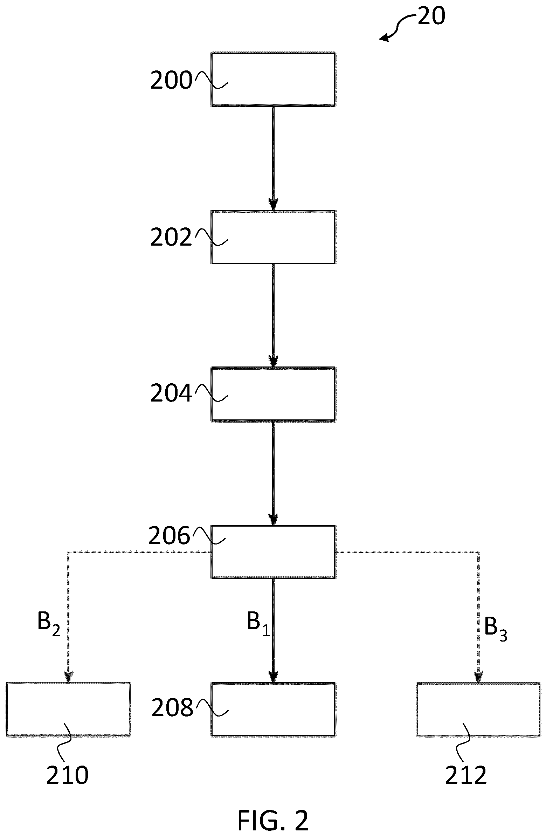

Figure 2 is a block diagram 20 illustrating a succession of security states of the microcontroller according to embodiments of the present description.

It is noted that such a succession is an exemplary succession, thus, also other successions may be considered, for instance, a succession considering additional security states or a succession without one or more of the described security states.

A first security state 200 may be related to the production phase of the microcontroller, that is, to the security features that are selectively masked during the production of such microcontroller.

A second security state 202, for instance, wherein the microcontroller enters after the first security state 200, may be related to the delivery of the microcontroller to a user, that is, to the security features that are selectively masked during the delivery of such microcontroller.

A third security state 204, for instance, wherein the microcontroller enters after the second security state 202, may be related to the use of the microcontroller by the (for instance, vehicle) original equipment manufacturer, that is, to the security features that are selectively masked during such use by such (vehicle) manufacturer.

A fourth security state 206, for instance, wherein the microcontroller enters after the third security state 204, may be the security state referred to as "in field", that is, a security state that may be related to the use of the microcontroller within the vehicle for managing the batteries.

For instance, such fourth security state 206 may be related to the security features that are selectively masked during the use of the microcontroller within the vehicle and, for instance, no security feature may be masked, that is, every security feature available may be enabled in order to avoid unauthorized modifications of the operational parameters and intrusions by hackers.

It is noted that during such use within the vehicle, the microcontroller is configured to operate using the original configuration.

If a microcontroller that is running in the fourth "in field" security state 206 fails, it transitions via a process (the branch indicated as B₁ in Figure 2) initiated by the original equipment manufacturer or the vehicle manufacturer to a fifth security state 208 that may be the security state referred to as "failure analysis", that is, a state where a limited number of security features are activated since it is used for investigating failures affecting microcontrollers that were configured to operate using the original configuration.

It is noted that the fifth "failure analysis" security state 208 is a process that leaves the microcontrollers in an unusable state that cannot be reversed, for instance, in a state where the cores of the microcontroller are under reset or in a state where a jitter is added in the clock of its communication peripherals.

It is also noted that, differently from the fourth security state 206, the first security state 200, the second security state 202, the third security state 204, and the fifth "failure analysis" security state 208 may have some of the security features masked, that is, not every security feature available is enabled.

If a device wherein the microcontroller is embedded, that is, if the corresponding battery, reaches the end of life without failures of the microcontroller, that is, without that the original equipment manufacturer or the vehicle manufacturer initiate the transition for entering in the fifth "failure analysis" security state 208, the microcontroller can enter, for instance, in response to a user request, in one of the following security states:
- a dismiss security state 210 (following the branch B₂ in Figure 2), wherein the microcontroller is dismissed and rendered unusable; or
- a reuse security state 212 (following the branch B₃ in Figure 2), wherein the microcontroller is reconfigured to operate according to the second configuration related to the different application, for instance, via the operations described in the block diagram 10 of Figure 1.

It is noted that the entering of the microcontroller in the dismiss security state 210 or in the reuse security state 212 cannot be reversed.

In fact, if the microcontroller enters in the dismiss security state 210, the microcontroller is wiped and its cores are held in a reset state.

It is noted that in the reuse security state 212 most of the security features may be masked, that is, almost every security feature available may be disabled in order to allow the operation of the microcontroller in the different application.

It is possible to enable by default, if the device wherein the microcontroller is embedded reaches the end of life without failures of such microcontroller, the dismiss security state 210, thus, disabling by default the reuse security state 212.

In this case, such reuse security state 212 may be enabled, for instance, by the user, by writing, in a dedicated area configured to store device configurations and comprised in a non-volatile memory of an HSM ("Hardware Security Module") comprised in the microcontroller, a request for activating such reuse security state 212.

Therefore, it is not requested to return the microcontroller, and eventually the battery wherein it is embedded, to the factory line of the manufacturer of the microcontroller.

Hence, such reuse security state 212 may be enabled, for instance, by the user, by writing a given pattern in a fixed location of such dedicated area while the microcontroller is in the fourth "in field" security state 206.

In response to such enabling:
- the microcontroller masks most of the security features or, in various embodiments, every security feature available is disabled;
- the reuse security state 212 cannot be reversed, that is, disabled; and
- the microcontroller is configured to erase all the secret information of the manufacturer, for instance, during the next Power-On Reset.

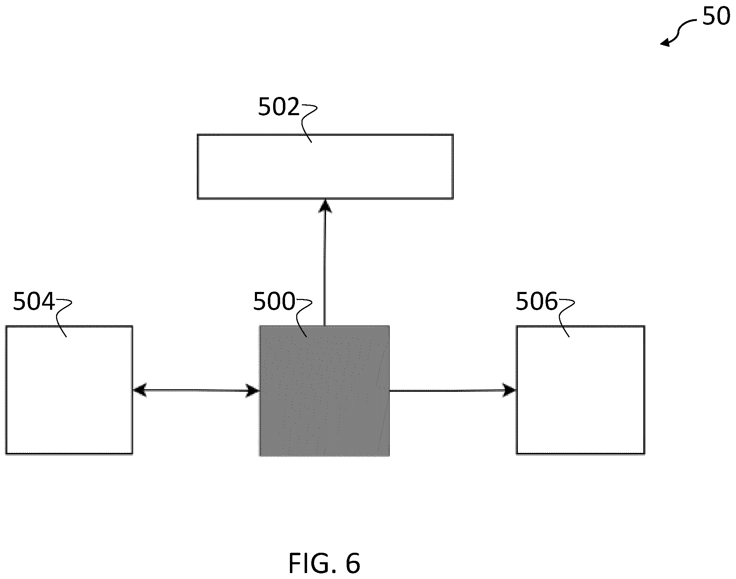

Such erase operation is performed, as previously described, as an atomic operation and only once, that is, in the transition between the original configuration and the second configuration, for instance, via such memory erasing block 106 by a memory erasing manager 50 (referring to Figure 6).

Such memory erasing manager 50 may be configured to erase, via the atomic erase operation and during such transition, the secret data stored within the memory, that is, the secret information of the manufacturer, such secret data comprising, for instance:
- the content of the HSM and the non-volatile memories ("NVMs") comprised in the microcontroller;
- keys, for instance, the cryptographic keys, stored in the dedicated area configured to store device configurations, which is comprised in a non-volatile memory of the HSM comprised in the microcontroller;
- a set of passwords comprising secret passwords used to enable or disable security functions or to allow or prevent security-related operations; and
- a first set of security data related to a record format, that is, to a DCF ("Device Configuration Format"), used to write configuration data in such dedicated area, such first set of security data being a first set of security configuration options related to the fourth "in field" security state 206.

Therefore, such first set of security data can be used to configure specific registers during the microcontroller boot and to set up an initial configuration for such microcontroller after a reset or start up, for instance, in order to configure the security-related functions and features of the microcontroller.

Such first set of security configuration options may comprise, for instance, clock jittering, memory attributes, or option bytes related to:
- memory protection functions related to the protection of code and data from both internal and external attacks;
- software isolation functions related to inter-processes protections used to avoid internal attacks;
- interface protection functions related to the protection of device entry points such as serial or debug ports; and/or
- system monitoring functions related to the detection of device external tampering attempts or abnormal behaviors.

It is noted that such option bytes can be stored in such dedicated area of the non-volatile memory, can be protected with redundancy, and can only be changed in specific secure conditions.

Such option bytes may comprise, for instance:
- RDP ("Read Protection") bytes, for preventing non-volatile memory access via a JTAG ("Joint Test Action Group");
- PCROP ("Proprietary Code Readout Protection") bytes, for preventing read access of configurable non-volatile memory areas performed by the microcontroller executing a malicious code;
- WRP ("Write Protection") bytes, for preventing accidental or malicious write or erase operations;
- BOR ("Brown Out Reset") bytes, for allowing a detection of the falling of the supply voltage below a given level in order to put the microcontroller in a reset state to ensure a proper startup when the power returns;
- OTP ("One-Time Programmable") bytes, for providing an area in the non-volatile memory which can be only written on or locked out in order to prevent any modification; and/or
- HDP (secure Hide Protection") bytes, for allowing the development of secure application running only once after reset before running user secure applications.

Therefore, in embodiments of the present description, the at least one non-volatile memory comprised in the microcontroller may comprise a Hardware Security Module ("HSM") and the secret data stored therein may comprise:
- data stored in said Hardware Security Module;
- a set of keys, in particular cryptographic keys;
- a set of passwords, for instance, the previously described set of passwords; and
- the first set of security configurations.

In addition, according to embodiments of the present description, such first set of security configurations may comprise data used to configure the microcontroller, in particular security functions of the microcontroller, during a boot of such microcontroller or in response to a reset or a power-on operation.

The memory erasing manager 50 may be configured to retain:
- first variables related to the available security states of the microcontroller; and
- a second variable indicating if the reuse security state 212 is enabled.

Therefore, in response to the erasing operation, the original configuration stored in the dedicated area is no more accessible, thus, the secret information of the manufacturer remains undisclosed.

In the reuse security state 212, the microcontroller is reconfigured to operate according to the second configuration that is related to the different application.

For instance, such second configuration may comprise a reduced set of passwords, retaining:
- the JTAG ("Joint Test Action Group") password, used to couple the microcontroller to a debugger in order to perform a testing of the microcontroller in a standardized way; and
- a NVM censorship password, used to allow the access to memory regions in order to perform erasing or reprogramming operation of such regions of the NVM.

For instance, in such reuse security state 212 the security features that may remain active can be one or more of the following security features:
- a port from the NVM to the HSM used to access such HSM;
- the enabling of the HSM via the record format, that is, the DCF, used to write configuration data in the dedicated area;
- a cryptographic coprocessor C3 embedded in the microcontroller and configured to provide support for other cores during the execution of security algorithms;
- a true random number generator ("TRNG");
- an HSM Mailbox register, that is, an interface comprised in the microcontroller and configured to establish a communication between the security domain, that is, the Hardware Security Module, HSM, and the non-security domain, that is, the HOST memory; and
- the one-time programmable ("OTP") protection enabled via the record format, that is, the DCF, used to write configuration data in the dedicated area.

Differently, one or more of the following security features may be disabled:
- AES ("Advanced Encryption Standard") Light;
- a peripheral PASS configured to protect read and write operations in the non-volatile memory ("NVM") by utilizing the password stored in the dedicated area, and to restrict access by external tools; and
- TDM ("Tamper Detection Module").

The reduction of the security features in the reuse security state 212 may lead to one or more of the following consequences:
- the microcontroller cannot be used for automotive applications since most of its security features are disabled and, consequently, its reliability is reduced;
- the reuse of the microcontroller for different applications is simpler since most of the security features are disabled, therefore, those security features that prevent the development of such different application are disabled;
- lowering the separation between the non-security domain, that is, the HOST memory, and the security domain, that is, the HSM, may allow to use the latter for ordinary computing; and
- the advancing in the security states, for instance, as illustrated in Figure 2, is not performed in the reuse security state 212 since it is not possible to reverse the entering in such reuse security state 212.

Figure 3 illustrates block diagrams 30 comprising a method block diagram 300ₐ for configuring a microcontroller considering a decommissioning option 320 according to embodiments of the present description.

The method block diagram 300ₐ may start in a Power-On Reset step 302 wherein a power-on reset ("POR") operation is performed by generating a reset signal when power is applied to the microcontroller.

Then, the method block diagram 300ₐ may proceed to a memory erasing block 300ₐ₁ related to the steps performed within a memory erasing manager, for instance the memory erasing manager 50 illustrated in Figure 6.

Therefore, such memory erasing block 300ₐ₁ may be configured to, in response to a power-on reset operation, read, via a first checking block 304, for instance, corresponding to the status checking block 102 of Figure 1, a use stage memory location M₁₀, (illustrated in the use stage block diagram 300_{c} related to an internal - not mapped - memory) indicative of the current state of the microcontroller.

As previously described, such current state of the microcontroller may assume a value out of the following values:
- the first value V₁ equal to, for instance, "MAIN";
- the second value V₂ equal to, for instance, "ACTIVATING", related to a pending erase operation of the content of non-volatile memories; and
- the third value V₃ equal to, for instance, "SECONDARY".

Therefore, in response to the status of the microcontroller assuming the first value V₁, following the branch indicated with C₁ in Figure 3, the method block diagram 300ₐ may proceed to a second checking block 306 that may be configured to check:
- if the security state of the microcontroller is the fourth "in field" security state 206, for instance, by checking a fourth memory location M₄ described in the following, and
- if the reuse security state 212 has been enabled by a user, for instance, by checking a sixth memory location M₆ described in the following.

It is noted that such checking operations may be performed by checking values stored in a non-volatile memory, in particular, the dedicated area configured to store device configurations and comprised in a non-volatile memory of the HSM of the microcontroller, for instance, a mapped one-time programmable memory 300_{b}, comprising, for instance:
- a first memory location M₁ configured to store a value indicating if the microcontroller is in the first security state 200 related to the production phase of the microcontroller;
- a second memory location M₂ configured to store a value indicating if the microcontroller is in the second security state 202 related to the delivery of the microcontroller to a user;
- a third memory location M₃ configured to store a value indicating if the microcontroller is in the third security state 204 related to the use of the microcontroller by the original equipment manufacturer;
- the fourth memory location M₄ configured to store a value indicating if the microcontroller is in the fourth "in field" security state 206 related to the use of the microcontroller within the vehicle for managing the batteries;
- a fifth memory location M₅ configured to store a value indicating if the microcontroller is in the fifth "failure analysis" security state 208 related to a disposal of the microcontroller;
- the sixth memory location M₆ configured to store a variable indicating if the reuse security state 212 has been enabled, for instance, by a user, by writing in such sixth memory location M₆ a first given signature (note that if anything else but the first given signature is written in such sixth memory location M₆, the reuse security state 212 is not enabled);
- a seventh memory location M₇ configured to store a variable indicating if the dismiss security state 210 has been enabled, for instance, by a user or by default, by writing in such seventh memory location M₇ a second given signature (note that if anything else but the second given signature is written in such seventh memory location M₇, the dismiss security state 210 is not enabled);
- an eighth memory location M₈ configured to store the first set of security data related to a record format (DCF) used to write configuration data in such dedicated area, such first set of security data being the first set of security configuration options related to the fourth "in field" security state 206; and
- a ninth memory location M₉ configured to store a second set of security data related to a record format (DCF) used to write configuration data in such dedicated area, such second set of security data being a second set of security configuration options related to the reuse security state 212, such second set of security configuration options being different from the first set of security configuration options, for instance, comprising different option bytes or memory attributes in order to enable different security functions.

If the second checking block 306 verifies that the security state of the microcontroller is the fourth "in field" security state 206 and that the reuse security state 212 has been enabled, the method block diagram 300ₐ may proceed, following a branch indicated as Y₁ in Figure 3, to a first setting block 308 that may be configured to perform a write operation in order to write in the use stage memory location M₁₀ the second value V₂ related to a pending erase operation of the content of non-volatile memories.

After the writing operation performed via the first setting block 308, the method block diagram 300ₐ return to the Power-On Reset step 302.

Otherwise, if the second checking block 306 finds that the security state of the microcontroller is different from the fourth "in field" security state 206 or that the reuse security state 212 has not been enabled, the method block diagram 300ₐ may proceed, following a branch indicated as N₁ in Figure 3, to a third checking block 310 that may be configured to check:
- if the security state of the microcontroller is the fourth "in field" security state 206, for instance, by checking the fourth memory location M₄, and
- if the dismiss security state 210 has been enabled by a user, for instance, by checking the seventh memory location M₇.

If the third checking block 310 verifies that the security state of the microcontroller is the fourth "in field" security state 206 and that the dismiss security state 210 has been enabled, the method block diagram 300ₐ may proceed, following a branch indicated as Y₂ in Figure 3, to the first setting block 308.

Otherwise, if the third checking block 310 finds that the security state of the microcontroller is different from the fourth "in field" security state 206 or that the dismiss security state 210 has not been enabled, the method block diagram 300ₐ may proceed, following a branch indicated as N₂ in Figure 3, to a SSCM block 300ₐ₂ ("System Status Configuration Module"), that is, a module configured to read the record format, that is, the DCF, used to write configuration data in the dedicated area and to configure the microcontroller according to such configuration data prior to the boot of such microcontroller.

Such SSCM block 300ₐ₂ may be configured to, in response to such third checking block 310 finding that the security state of the microcontroller is different from the fourth "in field" security state 206 or that the dismiss security state 210 has not been enabled, read, via a first reading block 312, the first set of security data related to the fourth "in field" security state 206, the previously described set of passwords, and the previously described keys.

Then, the method block diagram 300ₐ may proceed from the first reading block 312 to a release core block 314 that may be configured to release the core reset in order to run the microcontroller according to the read first set of security data related to the fourth "in field" security state 206, the set of passwords, and the keys.

It is noted that such releasing operation may correspond to the operation of running the microcontroller using the original configuration as previously described for the first running block 104, that is, in order to manage the battery for which such microcontroller was manufactured.

In response to the status of the microcontroller assuming the second value V₂, following the branch indicated with C₂ in Figure 3, the method block diagram 300ₐ may proceed to an erasing block 316 that may be configured to delete the secret information stored in microcontroller used for security-related applications comprising, for instance, as previously described:
- the HSM and the non-volatile memories ("NVMs") comprised in the microcontroller;
- keys, for instance, the cryptographic keys; and
- the first set of security data related to the fourth "in field" security state 206.

It is noted that such deletion of the secret information is performed via atomic erase operations, that is, erase operations that are indivisible and run without being interrupted, while the rest of the microcontroller is in a reset state.

Then, in response to the deletion of such secret information, the method block diagram 300ₐ may proceed to a fourth checking block 318 that may be configured to check:
- if the security state of the microcontroller is the fourth "in field" security state 206, for instance, by checking the fourth memory location M₄, and
- if the dismiss security state 210 has been enabled by a user, for instance, by checking the seventh memory location M₇.

If the fourth checking block 318 verifies that the security state of the microcontroller is the fourth "in field" security state 206 and that the dismiss security state 210 has been enabled, the method block diagram 300ₐ may proceed, following a branch indicated as Y₃ in Figure 3, to a reset state 320 that may be configured to leave the cores of the microcontroller in a reset state, therefore, leaving the microcontrollers in an unusable state and that cannot be reversed.

Otherwise, if the fourth checking block 318 finds that the security state of the microcontroller is different from the fourth "in field" security state 206 or that the dismiss security state 210 has not been enabled, the method block diagram 300ₐ may proceed, following a branch indicated as N₃ in Figure 3, to a second setting block 322 that may be configured to perform a write operation in order to write in the use stage memory location M₁₀ the third value V₃ related to running the microcontroller using the previously described second configuration.

Then, the method block diagram 300ₐ may proceed to the SSCM block 300ₐ₂ that may be configured to read, via a second reading block 324, the second set of security data related to the reuse security state 212.

Then, the method block diagram 300ₐ may proceed from the second reading block 324 to the release core block 314 that may be configured to release the core reset in order to run the microcontroller according to the read second set of security data related to the reuse security state 212.

It is noted that such releasing operation may correspond to the operation of running the microcontroller using the second configuration as previously described for the second running block 108, that is, in order to be reused in the different application.

In response to the status of the microcontroller assuming the third value V₃, following the branch indicated with C₃ in Figure 3, the method block diagram 300ₐ may proceed to the SSCM block 300ₐ₂, and, in particular, to the second reading block 324, that is configured to read the second set of security data related to the reuse security state 212 in order to, in the release core block 314, release the core reset in order to run the microcontroller according to such second set of security data related to the reuse security state 212.

Therefore, in embodiments according to the present description, the at least one non-volatile memory comprised in the microcontroller, for instance, a first non-volatile memory being the dedicated area 300, and a second non-volatile memory being the memory 300_{c} comprising the use stage memory location M₁₀, may be configured to store a second operation mode enabling variable, for instance, in the sixth memory location M₆, indicating to enable or to disable the second operation mode of the microcontroller, that is, the previously described variable indicating if the reuse security state 212 has been enabled.

In such a case, the state of the microcontroller, for instance, stored in the use stage memory location M₁₀, may be set, for instance, by default, to the first value V₁.

In response to the second operation mode enabling variable, for instance, stored in such sixth memory location M₆, indicating, for instance, via the second checking block 306, to enable the second operation mode, for instance, via the blocks 108 or 314, the state of the microcontroller may be set, for instance, in the first setting block 308, to the second value V₂.

**In** response to the operation of erasing the secret data, for instance, via the blocks 106 or 316, the state of the microcontroller may be set, for instance, in the second setting block 322, to the third value V₃.

**In** embodiments according to the present description, such second operation mode enabling variable, for instance, stored in the sixth memory location M₆, may be set, for instance, by default, to indicate to disable the second operation mode, and such second operation mode enabling variable may be set to indicate to enable the second operation mode, for instance, in the blocks 108 or 314, by a user.

In embodiments according to the present description, such at least one non-volatile memory 300_{b} and/or 300_{c} comprised in the microcontroller may be configured to store a third operation mode enabling variable, for instance, in the seventh memory location M₇, indicating to enable or to disable a third operation mode (for instance, via the dismiss security state 210 or via the reset state 320) of the microcontroller, that is, the variable indicating if the dismiss security state 210 has been enabled, such third operation mode 210 or 320 being related to an unusable state of the microcontroller, for instance, a state where the microcontroller is under reset or a state where a jitter is added to the clock of the communication peripherals of the microcontroller.

In such a case, in response to the third operation mode enabling variable, for instance, stored in the seventh memory location M₇, indicating, for instance, via the third checking block 310 or the fourth checking block 318, to enable the third operation mode, the microcontroller may be operated in the third operation mode, that is, according to the dismiss security state 210 or the reset state 320.

In embodiments according to the present description, such third operation mode enabling variable, for instance, stored in the seventh memory location M₇, may be set, for instance, by default, to indicate to disable the third operation mode 210 or 320, and such third operation mode enabling variable may be set to indicate to enable the third operation mode 210 or 320 by a user.

It is noted that the block diagrams 30 of Figure 3 are exemplary block diagrams, therefore, additional blocks may be present and/or some of the blocks may be absent, for instance, Figure 4 illustrates block diagrams 30' comprising a method block diagram 300'ₐ for configuring a microcontroller without considering a decommissioning option according to embodiments of the present description.

In such a case, the seventh memory location M₇ configured to store a value indicative of enabling the dismiss security state 210 may be absent.

Therefore, the method block diagram 300'ₐ may start in the Power-On Reset step 302 and may proceed to a memory erasing block 300'ₐ₁ related to the steps performed within a memory erasing manager that is not configured to consider a decommission option, for instance the memory erasing manager 50 illustrated in Figure 6.

The memory erasing block 300'ₐ₁ may be configured to, in response to a power-on reset operation, read, via the first checking block 304 the use stage memory location M₁₀ indicative of the current state of the microcontroller, which may assume the first value V₁, the second value V₂, or the third value V₃.

In response to the status of the microcontroller assuming the first value V₁, following the branch indicated with C₁ in Figure 4, the method block diagram 300'ₐ may proceed to the second checking block 306 that may be configured to check:
- if the security state of the microcontroller is the fourth "in field" security state 206, for instance, by checking the fourth memory location M₄, and
- if the reuse security state 212 has been enabled by a user, for instance, by checking the sixth memory location M₆.

If such second checking block 306 verifies that the security state of the microcontroller is the fourth "in field" security state 206 and that the reuse security state 212 has been enabled, the method block diagram 300'ₐ may proceed, following a branch indicated as Y₁ in Figure 4, to the first setting block 308 that may be configured to perform a write operation in order to write in the use stage memory location M₁₀ the second value V₂ related to a pending erase operation of the content of non-volatile memories.

After the writing operation performed via the first setting block 308, the method block diagram 300'ₐ return to the Power-On Reset step 302.

Otherwise, if the second checking block 306 finds that the security state of the microcontroller is different from the fourth "in field" security state 206 or that the reuse security state 212 has not been enabled, the method block diagram 300'ₐ may proceed, following a branch indicated as N₁ in Figure 4, to the SSCM block 300ₐ₂.

The SSCM block 300ₐ₂ may be configured to, in response to such second checking block 306 finding that the security state of the microcontroller is different from the fourth "in field" security state 206 or that the reuse security state 212 has not been enabled, read, via the first reading block 312, the first set of security data related to the fourth "in field" security state 206, the set of passwords, and the keys.

Then, the method block diagram 300'ₐ may proceed from the first reading block 312 to the release core block 314 that may be configured to release the core reset in order to run the microcontroller according to the read first set of security data related to the fourth "in field" security state 206, the set of passwords, and the keys.

It is noted that such releasing operation may correspond to the operation of running the microcontroller using the original configuration as previously described for the first running block 104, that is, in order to manage the battery for which such microcontroller was manufactured.

In response to the status of the microcontroller assuming the second value V₂, following the branch indicated with C₂ in Figure 4, the method block diagram 300'ₐ may proceed to the erasing block 316 that may be configured to delete the secret information stored in microcontroller used for security-related applications.

Such deletion of the secret information is performed via atomic erase operations, that is, erase operations that are indivisible and run without being interrupted, while the rest of the microcontroller is in a reset state.

Then, in response to the deletion of such secret information, the method block diagram 300'ₐ may proceed to the second setting block 322 that may be configured to perform a write operation in order to write in the use stage memory location M₁₀ the third value V₃ related to running the microcontroller using the previously described second configuration.

Then, the method block diagram 300'ₐ may proceed to the SSCM block 300ₐ₂ that may be configured to read, via the second reading block 324, the second set of security data related to the reuse security state 212.

Then, the method block diagram 300'ₐ may proceed from the second reading block 324 to the release core block 314 that may be configured to release the core reset in order to run the microcontroller according to the read second set of security data related to the reuse security state 212.

It is noted that such releasing operation may correspond to the operation of running the microcontroller using the second configuration as previously described for the second running block 108, that is, in order to be reused in the different application.

In response to the status of the microcontroller assuming the third value V₃, following the branch indicated with C₃ in Figure 4, the method block diagram 300'ₐ may proceed to the SSCM block 300ₐ₂, and, in particular, to the second reading block 324, that is configured to read the second set of security data related to the reuse security state 212 in order to, in the release core block 314, release the core reset in order to run the microcontroller according to such second set of security data related to the reuse security state 212.

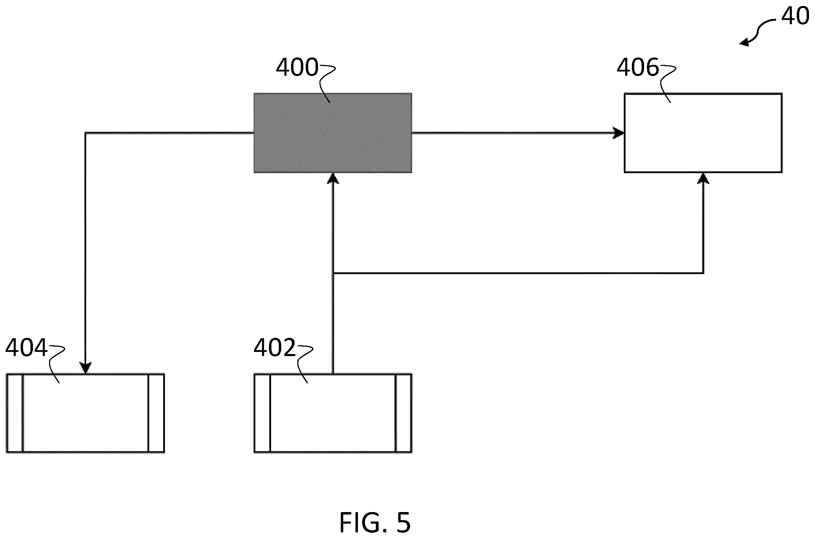

Figure 5 illustrates an exemplary block diagram 40 related to the interactions of a memory erasing manager 400 (also referred to as 300ₐ₁ in Figure 3, 300'ₐ₁ in Figure 4, and 50 in Figure 6) with other elements 402-406 comprised in the microcontroller according to embodiments of the present description.

The memory erasing manager 400 may be configured to perform, via the erasing block 316, the deletion of the secret information stored in microcontroller used for security-related applications by sending an erase signal to the non-volatile memories 404 and to the HSM 404 of the microcontroller.

The dedicated area configured to store device configurations and comprised in a non-volatile memory of the HSM of the microcontroller 402 (also referred to with the reference 300_{b} in Figures 3 and 4) may be configured to send to the memory erasing manager 400:
- information related to the security states, that is, the first security state 200 of the first memory location M₁, the second security state 202 of the second memory location M₂, the third security state 204 of the third memory location M₃, the fourth "in field" security state 206 of the fourth memory location M₄, and the fifth "failure analysis" security state 208 of the fifth memory location M₅; and
- information related to the enabling of the reuse security state 212 of the sixth memory location M₆ and/or of the dismiss security state 210 of the seventh memory location M₇.

In addition, such dedicated area 402 may be configured to send to the SSCM block 406 (also referred to with the reference 300ₐ₂ in Figures 3 and 4):
- information related to the security states; and
- information related to the sets of security data, that is, the first set of security data related to the fourth "in field" security state 206 of the eighth memory location M₈ and the second set of security data related to the reuse security state 212 of the ninth memory location M₉.

The memory erasing manager 400 may be further configured to send to such SSCM block 406 a signal indicating whether the first set of security data or the second set of security data is to be used, for instance:
- indicating that the first set of security data is to be used by sending, via the third checking block 310, a signal indicating that the security state of the microcontroller is different from the fourth "in field" security state 206, that the dismiss security state 210 has not been enabled, or that the reuse security state 212 has not been enabled; and
- indicating that the second set of security data is to be used by sending, either via the second setting block 322 or via the first checking block 304, a signal indicating that the status of the microcontroller assumes the third value V₃ or that a write operation used to write in the use stage memory location M₁₀ the third value V₃ has been performed.

Figure 6 illustrates an exemplary block diagram 50 related to a memory erasing manager configured to perform erasing operations according to embodiments of the present description.

Such memory erasing manager 50 may comprise a finite state machine ("FSM") 500 configured to perform the operations described for either the memory erasing block 300ₐ₁ or the memory erasing block 300'ₐ₁ of Figures 3 and 4, respectively.

The finite state machine 500 may be configured to offer a register interface 502 in order to allow the access to some of the memory locations, for instance, the memory locations 300_{c}, for instance, to perform debugging operations such as checking the use stage memory location M₁₀.

The finite state machine 500 may be configured to be interfaced with a non-volatile memory via a non-volatile memory interface 504, and:
- to read, for instance, via the first checking block 304, the second checking block 306, the third checking block 310, and/or the fourth checking block 318, the data required to perform the operations described above from the non-volatile memory, for instance, from the dedicated area 402, 300_{b};
- to program, for instance, via the first setting block 308 and/or the second setting block 322, the non-volatile memory, for instance, the dedicated area 402, 300_{b}, in order to store the information related to the security states; and
- to erase, for instance, via the erasing block 316, the secret information stored in the non-volatile memory, for instance, in parts of the dedicated area 402, 300_{b}.

The finite state machine 500 may be configured to be also interfaced with the SSCM block 406, 300ₐ₂, via a SSCM interface 506, and to send to such SSCM block 406 the signal indicating whether the first set of security data or the second set of security data is to be used.

Therefore, solutions as described herein facilitate achieving a method, for instance, the method 10 of Figure 1, 30 of Figure 3, or 30' of Figure 4, for configuring a microcontroller, such microcontroller comprising at least one non-volatile memory, for instance, a first non-volatile memory being the dedicated area 300_{b} or 300'_{b} and a second non-volatile memory being the memory 300_{c} comprising the use stage memory location M₁₀, **configured** to store:
- secret data, that is, the secret information of the manufacturer, comprising a first set of security configurations, that is, the first set of security data related to the fourth "in field" security state 206, for instance, stored in the eight memory location M₈,
- a second set of security configurations, that is, the second set of security data related to the reuse security state 212, for instance, stored in the ninth memory location M₉; and
- a state of the microcontroller, that is, the current state of the microcontroller, for instance, stored in the use stage memory location M₁₀, such state of the microcontroller being selected out of:
   a first value V₁, for instance, "MAIN", indicative of a first operation mode of the microcontroller, that is, indicating to run the microcontroller according to the original configuration, for instance, in the first running block 104 or in the release core block 314;
   a second value V₂, for instance, "ACTIVATING", indicative of a transition from the first operation mode 104 or 314 to a second operation mode, that is, indicating to run the microcontroller according to the second configuration related to the different application, for instance, in the second running block 108 or in the release core block 314; and
   a third value V₃, for instance, "SECONDARY", indicative of the second operation mode 108 or 314 of the microcontroller.

Such method 10, 30, or 30' comprises:
- if the state, for instance, stored in the use stage memory location M₁₀, of the microcontroller is equal to the first value V₁, operating the microcontroller in the first operation mode, that is, according to the original configuration, for instance, in the first running block 104 or in the release core block 314, using the first set of security configurations, for instance, stored in the eight memory location M₈;
- if the state of the microcontroller is equal to the second value V₂, erasing the secret data, for instance, via the memory erasing block 106 or the erasing block 316, and operating the microcontroller in the second operation mode, that is, according to the second configuration, for instance, in the second running block 108 or in the release core block 314, using the second set of security configurations, for instance, stored in the ninth memory location M₉; and
- if the state of the microcontroller is equal to the third value V₃, operating the microcontroller in the second operation mode, that is, according to the second configuration, for instance, again in such second running block 108 or in such release core block 314, using such second set of security configurations.

Solutions as described herein also apply to a microcontroller comprising:
- a manager unit, for instance, the memory erasing manager 50 illustrated in Figure 6, 300ₐ₁ of Figure 3, 300'ₐ₁ of Figure 4, or 400 of Figure 5, and
- at least one non-volatile memory, for instance, a first non-volatile memory being the dedicated area 300_{b} or 300_{b}, and a second non-volatile memory being the memory 300_{c} comprising the use stage memory location M₁₀, configured to store:
   secret data, that is, the secret information of the manufacturer, comprising a first set of security configurations, that is, the first set of security data related to the fourth "in field" security state 206, for instance, stored in the eight memory location M₈;
   a second set of security configurations, that is, the second set of security data related to the reuse security state 212, for instance, stored in the ninth memory location M₉; and
   a state of the microcontroller, that is, the current state of the microcontroller, for instance, stored in the use stage memory location M₁₀, such state of the microcontroller being selected out of:
      - a first value V₁, for instance, "MAIN", indicative of a first operation mode of the microcontroller, that is, indicating to run the microcontroller according to the original configuration, for instance, in the first running block 104 or in the release core block 314;
      - a second value V₂, for instance, "ACTIVATING", indicative of a transition from the first operation mode 104 or 314 to a second operation mode, that is, indicating to run the microcontroller according to the second configuration related to the different application, for instance, in the second running block 108 or in the release core block 314; and
      - a third value V₃, for instance, "SECONDARY", indicative of the second operation mode 108 or 314 of the microcontroller.

Such manager unit 50, 300ₐ₁, 300'ₐ₁, or 400 comprised in the microcontroller is configured to configure such microcontroller by performing steps of the method according to the present description.

In embodiments according to the present description, such manager unit may be implemented via a finite state machine, for instance, the finite state machine 500 illustrated in Figure 6.

In embodiments according to the present description, such manager unit may comprise:
- a register interface, for instance, the register interface 502, used to access memory locations in such at least one non-volatile memory;
- at least one non-volatile memory interfaces, for instance, the memory interface 504, used to perform memory reading, writing, and erasing operations; and/or
- a configuration interface, for instance, the SSCM interface 506, used to select the first operation mode, for instance, either in the first running block 104 or in the release core block 314, using the first set of security configurations, for instance, stored in the eight memory location M₈, or the second operation mode, for instance, either in the second running block 108 or in the release core block 314, using the second set of security configurations, for instance, stored in the ninth memory location M₉.

In embodiments according to the present description, the microcontroller may be embedded in a battery, in particular, a vehicle battery, and may be configured to manage such battery.

Thus, solutions as described herein facilitate deleting the secret information stored in microcontrollers used for security-related applications and disabling the security features without exposing the system to risk of unauthorized operations, facilitating the reuse of such microcontrollers in different applications.

Therefore, solutions as described herein facilitate the reusage of a microcontroller used for security-related applications and, for instance, of a battery wherein such microcontroller is embedded, in different applications without compromising on defense against security attacks.

In addition, solutions as described herein may allow the reuse of such microcontrollers used for security-related applications without involving the manufacturer, therefore, without returning the battery wherein the microcontroller is embedded or the microcontroller itself to the factory line.

Without prejudice to the underlying principles, the details and the embodiments may vary, even significantly, with respect to what has been described by way of example only without departing from the scope of the embodiments.

The extent of protection is determined by the annexed claims.

## Claims

1. Method (10; 30; 30') for configuring a microcontroller, said microcontroller comprising at least one non-volatile memory (300_{b}; 300'_{b}; 300_{c}) configured to store:
- secret data comprising a first set of security configurations (M₈),
- a second set of security configurations (M₉), and
- a state (M₁₀) of the microcontroller selected out of a first value (V₁) indicative of a first operation mode (104; 314) of the microcontroller, a second value (V₂) indicative of a transition from the first operation mode (104; 314) to a second operation mode (108; 314), and a third value (V₃) indicative of the second operation mode (108; 314) of the microcontroller;
wherein said method (10; 30; 30') comprises:
- if the state (M₁₀) of the microcontroller is equal to the first value (V₁), operating the microcontroller in the first operation mode (104; 314) using the first set of security configurations (M₈);
- if the state (M₁₀) of the microcontroller is equal to the second value (V₂), erasing the secret data (106; 316) and operating the microcontroller in the second operation mode (108; 314) using the second set of security configurations (M₉); and
- if the state (M₁₀) of the microcontroller is equal to the third value (V₃), operating the microcontroller in the second operation mode (108; 314) using the second set of security configurations (M₉).

2. The method (10; 30; 30') according to claim 1, wherein said erasing operation is performed via an atomic operation.

3. The method (10; 30; 30') according to claim 1 or claim 2, wherein said at least one non-volatile memory (300_{b}; 300'_{b}; 300_{c}) is configured to store a second operation mode enabling variable (M₆) indicating to enable or to disable the second operation mode (108; 314) of the microcontroller;
wherein:
- the state (M₁₀) of the microcontroller is set to the first value (V₁);
- in response to the second operation mode enabling variable (M₆) indicating (306) to enable the second operation mode (108; 314), setting (308) the state (M₁₀) of the microcontroller to the second value (V₂); and
- in response to (304) the operation of erasing the secret data (106; 316), setting (322) the state (M₁₀) of the microcontroller to the third value (V₃).

4. The method (10; 30; 30') according to claim 3, wherein:
- the second operation mode enabling variable (M₆) indicates to disable the second operation mode (108; 314); and
- said second operation mode enabling variable (M₆) is set to indicate to enable the second operation mode (108; 314) by a user.

5. The method (10; 30) according to any of the previous claims, wherein said at least one non-volatile memory (300_{b}; 300_{c}) is configured to store a third operation mode enabling variable (M₇) indicating to enable or to disable a third operation mode (210; 320) of the microcontroller, said third operation mode (210; 320) being related to an unusable state of the microcontroller;
wherein in response to the third operation mode enabling variable (M₇) indicating (310; 318) to enable the third operation mode (210; 320), operating the microcontroller in the third operation mode (210; 320).

6. The method (10; 30) according to claim 5, wherein:
- the third operation mode enabling variable (M₇) indicates to disable the third operation mode (210; 320); and
- said third operation mode enabling variable (M₇) is set to indicate to enable the third operation mode (210; 320) by a user.

7. The method (10; 30; 30') according to any of the previous claims, wherein said microcontroller is embedded in a battery, in particular, a vehicle battery, and is configured to manage said battery.

8. The method (10; 30; 30') according to any of the previous claims, wherein said at least one non-volatile memory (300_{b}; 300'_{b}; 300_{c}) comprise a Hardware Security Module, HSM, and wherein said secret data comprises:
- data stored in said Hardware Security Module;
- a set of keys, in particular cryptographic keys;
- a set of passwords; and
- said first set of security configurations (M₈).

9. The method (10; 30; 30') according to any of the previous claims, wherein said first set of security configurations (M₈) comprises data used to configure the microcontroller, in particular security functions of the microcontroller, during a boot of the microcontroller or in response to a reset or a power-on operation.

10. The method (10; 30; 30') according to any of the previous claims, wherein said microcontroller is a secure microcontroller.

11. Microcontroller comprising a manager unit (50; 300ₐ₁; 300'ₐ₁; 400) and at least one non-volatile memory (300_{b}; 300'_{b}; 300_{c}) configured to store:
- secret data comprising a first set of security configurations (M₈),
- a second set of security configurations (M₉), and
- a state (M₁₀) of the microcontroller selected out of a first value (V₁) indicative of a first operation mode (104; 314) of the microcontroller, a second value (V₂) indicative of a transition from the first operation mode (104; 314) to a second operation mode (108; 314), and a third value (V₃) indicative of the second operation mode (108; 314) of the microcontroller;
wherein said manager unit (50; 300ₐ₁; 300'ₐ₁; 400) is configured to configure the microcontroller by performing steps of the method according to any of the previous claims.

12. The microcontroller according to claim 11, wherein said manager unit (50; 300ₐ₁; 300'ₐ₁; 400) is implemented via a finite state machine (500).

13. The microcontroller according to claim 11 or claim 12, wherein said manager unit (50; 300ₐ₁; 300'ₐ₁; 400) comprises:
- a register interface (502) used to access memory locations in said at least one non-volatile memory;
- at least one non-volatile memory interfaces (504) used to perform memory reading, writing, and erasing operations; and/or
- a configuration interface (506) used to select the first operation mode (104; 314) using the first set of security configurations (M₈) or the second operation mode (108; 314) using the second set of security configurations (M₉).

14. The microcontroller according to any of claims 11 to 13, wherein said microcontroller is embedded in a battery, in particular, a vehicle battery, and is configured to manage said battery.
